# FASCICULE DE BREVET EUROPEEN

(11) **EP 0 980 849 B1**
(45) Date de publication et mention de la délivrance du brevet: **15.10.2003**
(21) Numéro de dépôt: 98402124.6
(22) Date de dépôt: 27.08.1998
(51) Int. Cl.: C03B 37/012, C03C 1/02

(54) **Procédé pour purifier de la silice et application au dépôt de silice purifiée sur une préforme de fibre optique**
Verfahren zur Reinigung von Kieselsäureteilchen und Verwendung für die Abscheidung der gereinigten Kieselsäureteilchen auf einer Vorform für optische Fasern
Process for purifying silica and use for depositing the purified silica on an optical fibre preform

(30) Priorité: 17.08.1998 FR 9810464
(43) Date de publication de la demande: 23.02.2000
(73) Titulaire: ALCATEL, 75008 Paris (FR)
(72) Inventeur: Drouart, Alain, 92000 Nanterre (FR); Gouez, Benoît, 78260 Acheres (FR); Lumineau, Yves, 95220 Herblay (FR); Ripoche, Pierre, 45300 Pithiviers (FR); Campion, Jean-Florent, 92270 Bois Colombes (FR)
(74) Mandataire: Laroche, Danièle

(56) Documents cités:
- EP-A- 0 578 553
- EP-A- 0 658 520
- EP-A- 0 863 108
- DE-A- 3 206 180
- FR-A- 2 446 264
- GB-A- 2 134 896
- US-A- 3 128 166
- M.CARRATT ET AL.: "MCVD-plasma process for manufacturing single-mode optical fibrers for terrestrial applications" ELECTRICAL COMMUNICATION,1 janvier 1994, pages 11-14, XP000445980

## Description

L'invention concerne un procédé pour purifier de la silice naturelle ou synthétique, et l'application de ce procédé pour déposer de la silice naturelle ou synthétique purifiée sur une préforme de fibre optique, dans lequel une préforme, sensiblement cylindrique et s'étendant dans une direction longitudinale, est mise en rotation sur elle même devant un plasma ou une flamme, qui se déplace en un mouvement de va et vient sensiblement parallèlement à la direction longitudinale de la préforme, et dans lequel un seul conduit d'alimentation nourrit le plasma ou la flamme en grains de silice naturelle ou synthétique.

D'une manière connue, une préforme est obtenue à partir d'un dépôt chimique en phase vapeur, réalisé à l'intérieur d'un tube monté sur un tour verrier, et auquel succède une opération de rétreint pour former une forme pleine.

Pour les fibres multimodes, l'élaboration de préformes est suffisante. En revanche, pour les fibres monomodes, il est avantageux d'ajouter de la matière à la préforme, en général de la silice naturelle ou synthétique, afin d'augmenter son diamètre, et d'obtenir, lors du fibrage, une fibre continue de plusieurs dizaines de kilomètres.

L'apport de matière à la préforme est réalisé au moyen d'une torche à plasma. La préforme, qui a une forme cylindrique, est mise en rotation sur elle même devant la torche dont le plasma est nourri en grains de silice. Les grains sont fondus, puis déposés et vitrifiés sur la préforme. Plusieurs passes sont effectuées pour atteindre le diamètre souhaité. Voir par exemple FR 2 446 264 A, GB 2 134 896 A ou DE 3 206 180 A.

Le dépôt de silice naturelle ou synthétique présente un inconvénient majeur. Des éléments alcalins comme le sodium ou le lithium, sont présents en proportion non négligeable dans ce type de matériaux, et se retrouvent présents dans les grains déposés, où ils favorisent la formation de liaisons entre le groupement OH et les éléments dopants, comme le germanium Ge. Ces liaisons absorbent certaines longueurs d'onde, et augmentent les pertes par atténuation de la fibre optique à ces longueurs d'onde.

Un des buts de l'invention est de fournir un procédé pour purifier de la silice naturelle ou synthétique.

A cet effet, l'invention a pour objet un procédé pour purifier de la silice naturelle ou synthétique dans lequel, un plasma ou une flamme issu d'un moyen d'apport d'énergie calorifique, est nourri par un conduit d'alimentation, en grains de silice naturelle ou synthétique, caractérisé en ce que le même conduit d'alimentation nourrit le plasma ou la flamme en un composé fluoré ou chloré, de préférence fluoré, mélangé à un gaz porteur, les conditions d'alimentation dudit conduit étant réglées pour faire réagir des éléments alcalins ou alcalino-terreux contenus dans les grains de silice naturelle ou synthétique, avec le fluor ou le chlore, de préférence le fluor, du composé fluoré ou chloré, de préférence fluoré.

Un des buts de l'invention est également d'appliquer le procédé pour purifier de la silice naturelle ou synthétique, au dépôt de silice naturelle ou synthétique sur une préforme de fibre optique, le dépôt ne contenant qu'une très faible quantité d'éléments alcalins ou alcalino-terreux.

A cet effet, l'invention fournit également un procédé pour déposer de la silice naturelle ou synthétique sur une préforme de fibre optique, dans lequel une préforme, sensiblement cylindrique et s'étendant dans une direction longitudinale, est mise en rotation sur elle même devant un plasma ou une flamme issu d'un moyen d'apport d'énergie calorifique, qui se déplace en un mouvement de va et vient sensiblement parallèlement à la direction longitudinale de la préforme, et dans lequel un conduit d'alimentation nourrit le plasma ou la flamme en grains de silice naturelle ou synthétique, caractérisé en ce que le même conduit d'alimentation nourrit le plasma ou la flamme en un composé fluoré ou chloré, de préférence fluoré, mélangé à un gaz porteur, les conditions d'alimentation dudit conduit étant réglées pour faire réagir des d'éléments alcalins ou alcalino-terreux contenus dans les grains de silice naturelle ou synthétique, avec le fluor ou le chlore, de préférence le fluor, du composé fluoré ou chloré, de préférence fluoré. Ledit conduit peut être interne, en amont du panache de plasma, ou bien externe au moyen d'apport d'énergie calorifique, dans le panache de plasma à la sortie de la torche.

Le plasma ou la flamme est le siège d'une réaction chimique où les grains de silice fondus réagissent avec le composé fluoré ou chloré, de préférence fluoré, du gaz porteur. Avantageusement, la température du plasma peut être ajustée pour obtenir un rendement élevé de la réaction, compte tenu des débits des conduits d'alimentation de la silice naturelle ou synthétique et du gaz porteur. Une température plus élevée permet de maintenir un bon rendement de réaction tout en augmentant les débits des conduits d'alimentation.

D'une façon également avantageuse, il est possible de régler la teneur en composé fluoré ou chloré, de préférence fluoré, du gaz porteur, en fonction de la taille moyenne des grains de silice naturelle ou synthétique. Des grains plus petits permettent de maintenir un bon rendement de réaction avec un gaz porteur moins riche en composé fluoré ou chloré, de préférence fluoré.

L'élimination des alcalins dans le dépôt de la silice naturelle ou synthétique permet de recharger la préforme de la fibre optique avec un matériau de départ beaucoup plus économique, surtout dans le cas où la silice est naturelle, que la silice synthétique à très haute pureté, dont le prix de revient environ 5 à 10 fois plus élevé. Le surcoût du traitement chimique reste proportionnellement faible. La qualité de transmission optique de la fibre issue de la préforme rechargée avec de la silice naturelle ou synthétique, traitée par un composé fluoré ou chloré, de préférence fluoré, est comparable à celle d'une fibre obtenue par recharge de silice synthétique à très haute pureté, et améliorée par rapport à celle d'une fibre issue d'une préforme rechargée avec de la silice naturelle ou synthétique, et non traitée par un composé fluoré ou chloré.

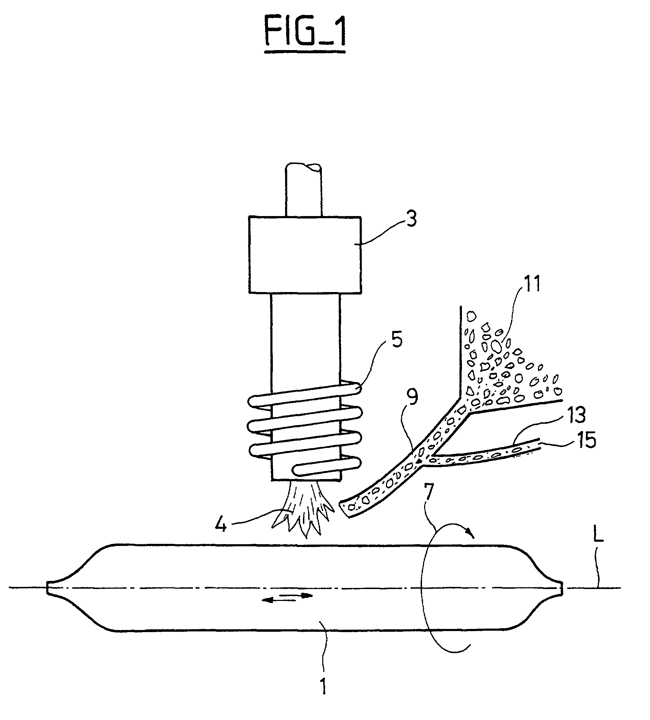

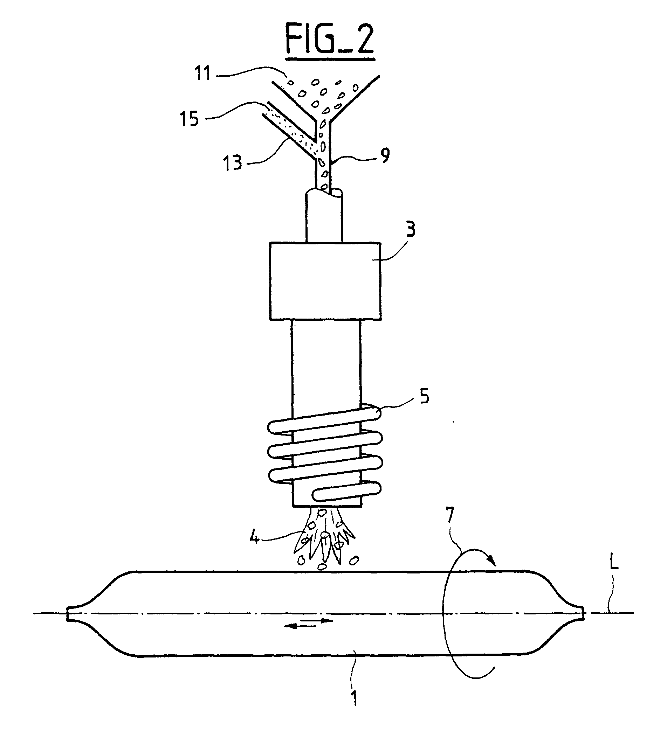

D'autres caractéristiques et avantages de l'invention apparaîtront à la lecture de la description des figures 1 et 2.
La figure 1 montre de façon schématique les éléments qui sont mis en oeuvre lors de l'application du procédé de purification de silice naturelle ou synthétique au dépôt sur une préforme de fibre optique, dans le cas d'une injection externe des réactifs, dans le panache du plasma en sortie de la torche.
La figure 2 montre de façon schématique les éléments qui sont mis en oeuvre lors de l'application du procédé de purification de silice naturelle ou synthétique au dépôt sur une préforme de fibre optique, dans le cas d'une injection interne des réactifs, en amont du panache de plasma.

Le procédé de purification de silice naturelle ou synthétique permet de déposer sur une préforme de fibre optique, une ou plusieurs couches de silice naturelle ou synthétique ne contenant qu'une quantité négligeable d'éléments alcalins, tels le sodium ou le lithium, ou alcalino-terreux. L'opération de dépôt, appelée aussi recharge, sert à augmenter le diamètre d'une préforme, pour permettre de tirer par fibrage une fibre continue longue de plusieurs dizaines de kilomètres.

Sur la figure 1, le procédé comprend une torche à plasma 3, qui est le moyen d'apport d'énergie calorifique, comprenant des éléments électriques d'induction 5. Une préforme 1 se présentant sous la forme d'un cylindre s'étendant dans une direction longitudinale L, est mise en rotation sur elle même, comme indiqué par la flèche 7. La torche à plasma 3 se déplace en un mouvement de va et vient sensiblement parallèlement à la direction longitudinale L de la préforme. La rotation de la préforme est assurée par un tour verrier non représenté. Les mandrins du tour actionnent deux tiges de verre, soudées aux deux extrémités de la préforme. Le tour est placé dans une cabine close qui assure la protection contre les rayonnements électromagnétiques, et contre les dégagements gazeux issus de la réaction chimique.

Un conduit d'alimentation 9 apporte dans le plasma des grains de silice naturelle ou synthétique 11. Ces grains résultent, par exemple, du broyage de blocs grossiers de quartz naturel ou de cristal de roche. L'alimentation s'effectue simplement par gravité.

Le conduit d'alimentation 9 reçoit un conduit d'alimentation 13 qui nourrit le plasma, en plus des grains 11, en un gaz 15 qui transporte une proportion donnée de composé fluoré ou chloré, de préférence fluoré. Le conduit d'alimentation est externe à la torche à plasma 3, conduisant les réactifs dans le panache du plasma en sortie de la torche. De préférence, le gaz porteur est l'air. Le composé fluoré est, par exemple, l'hexafluorure de soufre SF₆, ou un fréon généralement choisi parmi ceux autorisés par la réglementation européenne, tel que C₂F₆. Le composé chloré est, par exemple, le chlore Cl₂. Une vanne reliée à une armoire à gaz placée à l'extérieur de la cabine, permet de régler le débit du gaz porteur. Une autre vanne reliée à l'armoire à gaz permet de régler la proportion de composé fluoré ou chloré dans le gaz porteur. Le gaz porteur peut être composé uniquement du composé fluoré ou chloré, de préférence fluoré, à l'état pur. Une vanne non représentée, est placée à l'extérieur de la cabine pour permettre de régler le débit d'alimentation des grains 11.

Le plasma est le siège d'une réaction chimique entre les grains de silice naturelle ou synthétique et le composé fluoré ou chloré, de préférence fluoré. La température du plasma comprise entre 5000°C et 10000°C, entraîne la fusion des grains de silice naturelle ou synthétique. Les composés fluorés ou chlorés réagissent avec les alcalins tels le sodium ou le lithium présents dans la silice naturelle ou synthétique, et donnent lieu à un dégagement gazeux de fluorure NaF ou LiF, ou de chlorure NaCI ou LiCI.

Un bon rendement de la réaction est obtenu dans les conditions opératoires suivantes :

| | |
|---|---|
| puissance du plasma | 40 - 100 kW |
| débit de la silice naturelle ou synthétique | 0,2 - 5 kg/heure |
| taille moyenne des grains | 50 - 600 µm |
| débit du gaz porteur | 0 - 15 litre/mn |
| proportion de composé fluoré dans le gaz porteur | 0,3 - 100 % |

Dans l'exemple précédent, le choix d'une torche à plasma ne retire pas de généralité au procédé, qui peut être mis en oeuvre, par un autre moyen d'apport d'énergie calorifique créant une température supérieure à 1000°C, et notamment par une flamme issue d'un dispositif de combustion.

La figure 2 est semblable à la figure 1, à l'exception de l'alimentation en grains 11 et en gaz 15 qui est interne à la torche à plasma 3, conduisant les réactifs en amont du panache du plasma.

## Revendications

1. Procédé pour purifier de la silice naturelle ou synthétique dans lequel, un plasma ou une flamme (4), issu d'un moyen d'apport d'énergie calorifique (3), est nourri par un conduit d'alimentation (9), en grains de silice naturelle ou synthétique (11), **caractérisé en ce que** le même conduit d'alimentation (9), nourrit le plasma ou la flamme (4), en un composé fluoré ou chloré mélangé à un gaz porteur (15), les conditions d'alimentation dudit conduit (9) étant réglées pour faire réagir des éléments alcalins ou alcalino-terreux contenus dans les grains de silice naturelle ou synthétique (11), avec le fluor ou le chlore du composé fluoré ou chloré.

2. Procédé selon la revendication 1, **caractérisé en ce que** le composé fluoré ou chloré est fluoré.

3. Procédé selon l'une des revendications 1 ou 2 tel que ledit conduit (9) est externe au moyen d'apport d'énergie calorifique (3).

4. Procédé selon l'une des revendications 1 ou 2 tel que ledit conduit (9) est interne au moyen d'apport d'énergie calorifique (3).

5. Procédé pour déposer de la silice naturelle ou synthétique sur une préforme de fibre optique, dans lequel une préforme (1), sensiblement cylindrique et s'étendant dans une direction longitudinale (L), est mise en rotation (7) sur elle même devant un plasma ou une flamme (4), issu d'un moyen d'apport d'énergie calorifique (3), qui se déplace en un mouvement de va et vient sensiblement parallèlement à la direction longitudinale (L) de la préforme (1), et dans lequel un conduit d'alimentation (9) nourrit le plasma ou la flamme en grains de silice naturelle ou synthétique (11), **caractérisé en ce que** le même conduit d'alimentation (9) nourrit le plasma ou la flamme en un composé fluoré ou chloré mélangé à un gaz porteur (15), les conditions d'alimentation dudit conduit (9) étant réglées pour faire réagir des éléments alcalins ou alcalino-terreux contenus dans les grains de silice naturelle ou synthétique (11), avec le fluor ou le chlore du composé fluoré ou chloré.

6. Procédé selon la revendication 5, **caractérisé en ce que** le composé fluoré ou chloré est fluoré.

7. Procédé selon l'une des revendications 5 ou 6 tel que ledit conduit (9) est externe au moyen d'apport d'énergie calorifique (3).

8. Procédé selon l'une des revendications 5 ou 6 tel que ledit conduit (9) est interne au moyen d'apport d'énergie calorifique (3).

9. Procédé selon l'une des revendications 1 à 8, dans lequel le moyen d'apport d'énergie calorifique (3) crée une température supérieure à 1000°C.

## Patentansprüche

1. Verfahren zum Reinigen natürlicher oder synthetischer Kieselsäure, bei welchem ein von einem Mittel zur Zufuhr von Wärmeenergie (3) stammendes Plasma oder eine Flamme (4) mittels eines Versorgungsgangs (9) mit natürlichen oder synthetischen Kieselsäureteilchen (11) versorgt wird, **dadurch gekennzeichnet, dass** der gleiche versorgungsgang (9) das Plasma oder die Flamme (4) mit einer mit einem Trägergas (15) gemischten fluorierten oder chlorierten Verbindung versorgt, wobei die Versorgungsbedingungen des Gangs (9) geregelt werden, um in den natürlichen oder synthetischen Kieselsäureteilchen (11) enthaltene alkalische oder erdalkalische Elemente mit dem Fluor oder dem Chlor der fluorierten oder chlorierten Verbindung reagieren zu lassen.

2. Verfahren nach Anspruch 1, **dadurch gekennzeichnet, dass** die fluorierte oder chlorierte Verbindung fluoriert ist.

3. Verfahren nach einem der Ansprüche 1 oder 2, bei welchem sich der Gang (9) außerhalb des Mittels zur Zufuhr von Wärmeenergie (3) befindet.

4. Verfahren nach einem der Ansprüche 1 oder 2, bei welchem sich der Gang (9) innerhalb des Mittels zur Zufuhr von Wärmeenergie (3) befindet.

5. Verfahren zum Abscheiden von natürlicher oder synthetischer Kieselsäure auf eine Vorform einer optischen Faser, bei welchem eine im wesentlichen zylindrische und in einer Längsrichtung (L) sich erstreckende Vorform (1) in Drehung (7) um sich selbst versetzt wird, vor einem von einem Mittel zur Zufuhr von Wärmeenergie (3) stammenden Plasma oder einer Flamme (4), welche in einer zur Längsrichtung (L) der Vorform (1) im wesentlichen parallelen Hin- und Herbewegung versetzt wird, und bei welchem ein Versorgungsgang (9) das Plasma oder die Flamme mit natürlichen oder synthetischen Kieselsäureteilchen (11) versorgt, **dadurch gekennzeichnet, dass** der gleiche Versorgungsgang (9) das Plasma oder die Flamme mit einer, mit einem Trägergas (15) gemischten, fluorierten oder chlorierten Verbindung, versorgt, wobei die Versorgungsbedingungen des Gangs (9) geregelt werden, um die in den natürlichen oder synthetischen Kieselsäureteilchen (11) enthaltenen alkalischen oder erdalkalischen Elemente mit dem Fluor oder dem Chlor der fluorierten oder chlorierten Verbindung reagieren zu lassen.

6. Verfahren nach Anspruch 5, **dadurch gekennzeichnet, dass** die fluorierte oder chlorierte Verbindung fluoriert ist.

7. Verfahren nach einem der Ansprüche 5 oder 6, bei welchem sich der Gang (9) außerhalb des Mittels zur Zufuhr von Wärmeenergie (3) befindet.

8. Verfahren nach einem der Ansprüche 5 oder 6, bei welchem sich der Gang (9) innerhalb des Mittels zur Zufuhr von Wärmeenergie (3) befindet.

9. Verfahren nach einem der Ansprüche 1 bis 8, bei welchem das Mittel zur Zufuhr von Wärmeenergie (3) eine Temperatur oberhalb von 1000°C erzeugt.

## Claims

1. A method of purifying natural or synthetic silica in which a plasma or a flame (4) from heat energy supply means (3) is fed by a feed duct (9) with particles of natural or synthetic silica (11), **characterized in that** the same feed duct (9) feeds the plasma or flame (4) with a fluorine or chlorine compound mixed with a carrier gas (15) and the feed conditions of said duct (9) are adjusted to cause alkali or alkaline-earth elements contained in the natural or synthetic silica particles (11) to react with the fluorine or the chlorine of the fluorine or chlorine compound.

2. A method according to claim 1 **characterized in that** the fluorine or chlorine compound is a fluorine compound.

3. A method according to either of claims 1 and 2, such that said duct (9) is external to the heat energy supply means (3).

4. A method according to either of claims 1 and 2, such that said duct (9) is internal to the heat energy supply means (3).

5. A method of depositing natural or synthetic silica on an optical fibre preform, in which a substantially cylindrical preform (1) extending in a longitudinal direction (L) is set into rotation (7) about its axis in front of a plasma or flame (4) coming from heat energy supply means (3) which move back and forth substantially parallel to the longitudinal direction (L) of the preform (1), and in which a feed duct (9) feeds the plasma or flame with particles of natural or synthetic silica (11), **characterized in that** the same feed duct (9) feeds the plasma or flame with a fluorine or chlorine compound mixed with a carrier gas (15), the feed conditions of said duct (9) being adjusted to cause alkali or alkaline-earth elements contained in the particles of natural or synthetic silica (11) to react with the fluorine or the chlorine of the fluorine or chlorine compound.

6. A method according to claim 5 **characterized in that** the fluorine or chlorine compound is a fluorine compound.

7. A method according to either of claims 5 and 6 [sic], such that said duct (9) is external to the heat energy supply means (3).

8. A method according to either of claims 5 and 6 [sic], such that said duct (9) is internal to the heat energy supply means (3).

9. A method according to one of claims 1 to 8, in which the heat energy supply means (3) are adapted to create a temperature greater than 1 000°C.
